# EUROPÄISCHE PATENTSCHRIFT

(11) **EP 0 436 220 B1**
(45) Veröffentlichungstag und Bekanntmachung des Hinweises auf die Patenterteilung: **08.09.1993**
(21) Anmeldenummer: 90125588.5
(22) Anmeldetag: 27.12.1990
(51) Int. Cl.: C04B 35/80, C04B 33/13, C04B 16/02

(54) **Keramische Zusammensetzung**
Ceramic composition
Composition céramique

(30) Priorität: 04.01.1990 DE 4000162
(43) Veröffentlichungstag der Anmeldung: 10.07.1991
(73) Patentinhaber: Theuerkorn, Werner, D-84389 Postmünster (DE)
(72) Erfinder: Theuerkorn, Werner, D-84389 Postmünster (DE)
(74) Vertreter: Reitzner, Bruno, Dr.

(56) Entgegenhaltungen:
- DE-C- 3 736 680

## Beschreibung

Die Erfindung betrifft keramische Zusammensetzungen in Form von ungebrannten Massen oder Formkörpern, Verfahren zu deren Herstellung sowie gebrannte Formkörper aus diesen Zusammensetzungen.

Technisch anspruchsvolle keramische Zusammensetzungen bedürfen einer Verstärkung aus faserförmigem Material, so daß sie einmal eine größere Bindigkeit und damit für die Herstellung von Formkörpern eine bessere Formbarkeit oder Plastizität haben und zum anderen, damit bei der Trocknung die Gefahr einer Rissebildung vermindert und die Elastizität und damit die mechanische Beanspruchbarkeit der trockenen Formkörper erhöht wird.

Es ist bekannt, daß zur Erfüllung dieser Erfordernisse keramische Zusammensetzungen mit Zuschlagstoffen aus organischen oder anorganischen Fasern angereichert werden.

Zuschläge aus organischen Fasern oder faserförmigen Gebilden, wie Gerstengrannen, Stroh und dergleichen sind seit Jahrhunderten für ungebrannte Formkörper, wie Lehmputze und -ausfachungen bekannt. Zudem sind in neuerer Zeit Zuschläge aus anorganischen Fasern, wie Asbest, Glas, Graphit, Siliciumcarbid und dergleichen für gebrannte und ungebrannte keramische Massen oder Formkörper bekannt geworden.

Die bisher verwendeten faserförmigen organischen Verstärkungen bewirken aufgrund ihrer Struktur keine starke räumliche Vernetzung der Massen, lassen sich für dünne Formkörper nicht ausreichend fein verteilen und können nicht ausgebrannt werden, ohne daß entweder die Grundmasse gesprengt wird oder große Hohlräume hinterbleiben.

Aus der DE-C-37 36 680 sind keramische Formkörper bekannt, die aus einer Mischung feuerfester Materialien, Pech, Teer, Bindemitteln und Cellulosehohlfasern durch Verformen und Brennen erhältlich sind. Die Cellulosehohlfasern sind unverzweigt und haben vorzugsweise eine Länge von 1 bis 2 mm. Nach dem Brennen sind die Formkörper von kleinen Kanälen durchsetzt, die im Querschliff nach dem Anfärben keine lanzettförmigen, sternförmig aufeinander zulaufende Gebilde zeigen.

Die bekannten anorganischen faserförmigen Zuschläge besitzen nicht die Quellfähigkeit, die für die Formbarkeit der Masse wichtig ist, müssen aus nicht regenerierbaren Rohstoffen aufwendig industriell hergestellt und aufbereitet werden, sind zum überwiegenden Teil (Asbest-, Glas- und siliciumcarbid-Fasern) gesundheitsschädlich und nicht umweltverträglich und lassen sich nicht (Siliciumcarbid) bzw. nicht problemlos ausbrennen.

Der Erfindung liegt die Aufgabe zugrunde, bei keramischen Zusammensetzungen in Form von Massen oder Formkörpern, die eine oder mehrere keramische Komponenten und faserförmige organische Verstärkungen enthalten, die faserförmigen Verstärkungen so auszubilden, daß sie (a) einerseits auf der Stufe der Zubereitung der Zusammensetzungen auch die Verwendung von mageren und an sich schlecht verformbaren keramischen Ausgangskomponenten mit niedriger Plastizität und Bindigkeit ermöglichen und trotzdem deren Verarbeitungseigenschaften, insbesondere deren Formbarkeit, verbessern und daß sie (b) andererseits beim Trocknen der keramischen Zusammensetzungen die Rissebildung und die Bildung von Hohlräumen verhindern und die Erzeugung von festen und elastischen Formkörpern ermöglichen.

Diese Aufgabe wird erfindungsgemäß dadurch gelöst, daß die keramischen Zusammensetzungen als faserförmige organische Verstärkungen Fasergebilde aus cellulosehaltigem Material mit einem etwa 3 - 15 mm langen und etwa 30 - 70 um starken Stammfaserbündel, von der mehrere, etwa gleich lange und etwa 10 - 30 µm starke radiale Seitenfasern ausgehen, enthalten. Vorzugsweise ist das Stammfaserbündel etwa 7 ±1 mm lang und etwa 50 ±5 µm stark; die Seitenfasern sind vorzugsweise etwa 20 ±5 µm stark.

Die Struktur der erfindungsgemäß verwendeten Fasergebilde ist sehr wichtig. Das stärkere Stammfaserbündel ist für die strukturelle Integrität und Ausrichtung der Fasergebilde verantwortlich, während die dünneren, radialen Seitenfasern die Vernetzung mit den Teilchen der keramischen Komponente(n) bewirken. Organische Fasergebilde, die nur aus radial von einem Mittelpunkt ausgehenden dünnen Fasern zusammengesetzt sind (z.B. Daunen), sind für die Zwecke der vorliegenden Erfindung nicht geeignet, da die dünnen Fasern beim Einarbeiten in die keramische Masse leicht verklumpen oder reißen bzw. den bei der Trocknung auftretenden Zugkräften allein häufig nicht widerstehen können. Wichtig ist auch die Länge des Stammfaserbündels, da zu lange Stammfasern die Herstellung von Formkörpern mit dünnen Wandstärken (z.B. Strangpreßlingen) erschweren, während zu kurze Stammfasern die Bindigkeit und Reißfestigkeit der keramischen Massen und Formkörper vermindern, da in diesem Fall die dünnen Seitenfasern allein den bei der Verarbeitung und Trockung auftretenden Zugkräften häufig nicht widerstehen können.

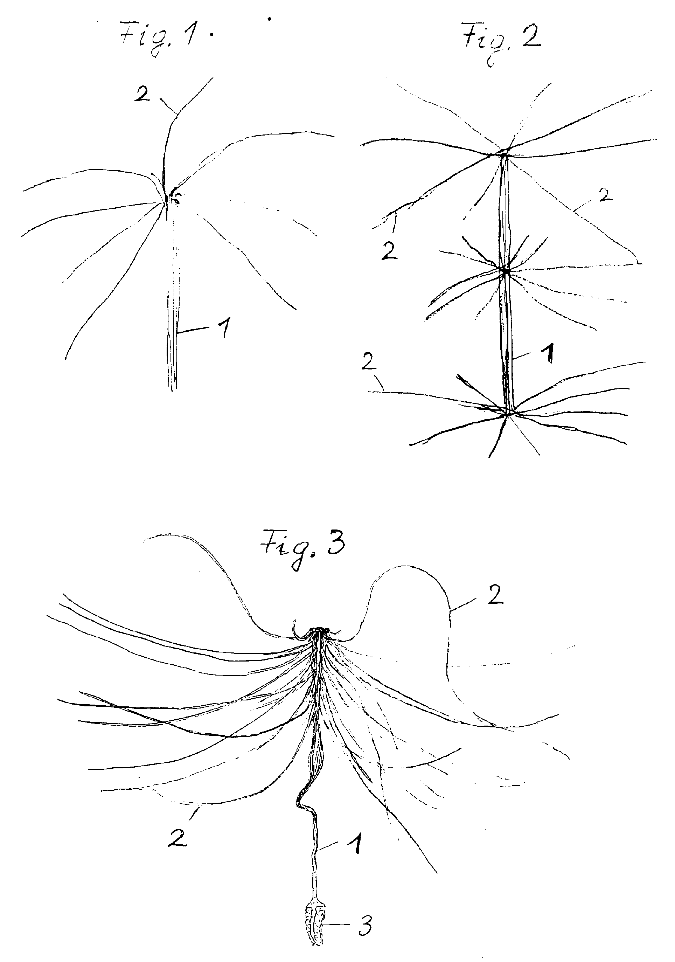

Die radialen Seitenfasern der Fasergebilde können von einer oder von mehreren Stellen des Stammfaserbündels ausgehen, wie es durch die Figuren 1 und 2 erläutert ist, worin das Stammfaserbündel jeweils mit 1 und die Seitenfasern jeweils mit 2 bezeichnet sind.

Ein besonders vorteilhaftes Beispiel für die erfindungsgemäß verwendeten Fasergebilde sind die Flugschirmchen von Rohrkolbensamen. Rohrkolbengewächse (Typhaceae) kommen in Mitteleuropa als breitblättriger Rohrkolben (Typha latifolia) und als schmalblättriger Rohrkolben (Typha angustifolia) vor. Die Flugschirmchen der Rohrkolbensamen haben im allgemeinen die in Fig. 3 dargestellte Form. Von einem etwa 50 µm starken Stammfaserbündel 1 mit einer Länge von etwa 7 mm gehen etwa 30 - 40 radiale Seitenfasern 2 mit einer Stärke von etwa 20 µm aus, deren Länge etwa der Länge des Stammfaserbündels 1 entspricht. Die meisten Seitenfasern gehen vom oberen Ende des Stammfaserbündels aus, und zwar nicht im rechten Winkel zum Stammfaserbündel, sondern zunächst tangential zur Richtung des Stammfaserbündels, worauf sie sich allmählich krümmen, so daß sie zunächst in einem spitzen Winkel, dann in einem rechten Winkel und schließlich zum Teil in einem stumpfen Winkel zum Stammfaserbündel verlaufen. Diese spezielle Anordnung ist wahrscheinlich dafür verantwortlich, daß die Struktur des Fasergebildes während des Einarbeitens in die keramische Masse weitgehend erhalten bleibt, da die Seitenfasern nachgeben können, ohne gleich vom Stammfaserbündel abzureißen.

Am unteren Ende des Stammfaserbündels befindet sich der Samen 3. Dieser ist jedoch für die Erfindung nicht erforderlich. Es ist vielmehr günstig, den Samen 3 keimunfähig zu machen, da dieser z.B. in einer feuchten Tonmasse leicht zum Keimen neigt, so daß die Oberfläche der Tonmasse häufig von einem unerwünschten "grünen Rasen" bedeckt ist.

Die erfindungsgemäß bevorzugt verwendeten Flugschirmchen von Rohrkolbensamen sind auch deshalb vorteilhaft, weil Rohrkolben ein in der Natur reichlich vorhandenes Rohmaterial darstellen, das z.B. auf Lehmschlickflächen von Kieswerken angebaut werden kann. Rohrkolben sind regenerierbar und problemlos anbaubar, wirken der Überdüngung entgegen, bedürfen keiner teuren industriellen Herstellung und Aufbereitung, sind nicht gesundheitsgefährdend und können durch Kompostierung problemlos entsorgt werden. Die Flugschirmchen der Rohrkolbensamen lassen sich einfach, trocken wie naß, in alle keramischen Grundmassen einmischen und bewirken aufgrund ihrer besonderen Struktur eine räumliche Vernetzung innerhalb der Grundmasse und damit eine stark verbesserte Bindigkeit auch in extrem mageren Massen. Dies bedeutet eine starke Verbesserung der Formbarkeit bei der Herstellung anspruchsvoller, sphärisch geformter, großflächiger, innenformenumschließender oder sehr dünner Formteile.

Im Trocknungsbereich (von feucht über lederhart bis trocken) bleibt die keramische Zusammensetzung mit den verschiedensten mechanischen Bearbeitungsmethoden wie Raspeln, Schaben, Sägen, Bohren, Ziehen, Drehen und Ausdrehen, gut bearbeitbar.

Nach der Trocknung bleiben die erfindungsgemäßen, durch die Fasergebilde verstärkten Formkörper aufgrund ihrer vernetzten Struktur weiterhin elastisch und können somit auch in ungebranntem Zustand z.B. für Wandputze, Ausfachungen, Schalenkonstruktionen, Schalungen, Abformungen, Modelliermassen und dergleichen verwendet werden. Dabei bleiben die erfindungsgemäß faserverstärkten Zusammensetzungen verrottungsbeständig.

Beim Brennen einer erfindungsgemäß verstärkten keramischen Masse bzw. eines Formkörpers brennt die Faserverstärkung aus, ohne giftige Rückstände zu hinterlassen und ohne die Masse zu zerstören. Die beim Ausbrennen entstehenden Hohlräume weisen aufgrund der räumlichen Struktur der erfindungsgemäß verwendeten Fasergebilde vielfach feinstvernetzte Röhrensysteme auf, wodurch sich die so hergestellten gebrannten Formteile auch als Filterkörper und Dämmstoffe eignen.

Die erfindungsgemäßen keramischen Formkörper können auch im getrockneten Zustand mit anderen keramischen Formteilen verbunden werden. Zu diesem Zweck wird der getrocknete Formkörper an der vorgesehenen Verbindungsstelle angefeuchtet, worauf das noch plastische Formteile an dieser Stelle angesetzt wird. So kann man beispielsweise ein Tongefäß im lederharten oder trockenen Zustand einer Feinbearbeitung unterziehen und einen Henkel oder ein anderes Ansatzstück anfügen. Ein normales Tongefäß kann nach dem Trocknen nicht mehr an einer Stelle angefeuchtet werden, da der Ton dort quellen und die umgebende getrocknete Masse sprengen würde. Die erfindungsgemäßen Zusammensetzungen können also auch lokalen Druckbelastungen widerstehen.

Ferner ist es möglich, die erfindungsgemäßen Zusammensetzungen sehr schnell bei höheren Temperaturen zu trocknen, ohne daß Risse und Hohlräume auftreten. Es ist ferner möglich, noch nicht vollständig durchgetrocknete Formkörper zu brennen. Beispielsweise traten beim lokalen Erhitzen einer noch feuchten, plastischen Scheibe aus erfindungsgemäß verstärktem Ton mit Hilfe eines Schweißbrenners keine Risse auf. Nach dieser Behandlung bestand das Zentrum der Scheibe aus gebranntem Ton, während der Umfang der Scheibe noch plastisch war und zwischen Zentrum und Umfang der Scheibe der Trockungsgrand stetig abnahm.

Vorzugsweise enthält die erfindungsgemäße Zusammensetzug etwa 0,05 bis 20 Gew.-%, insbesondere 0,5 - 5 Gew.-%, besonders bevorzugt 1 - 2 Gew.-% Fasergebilde, bezogen auf das Trockengewicht der Zusammensetzung. Je nach der Menge der verwendeten Fasergebilde sind die gebrannten Formkörper mehr oder weniger porös. Bei einem hohen Anteil an Fasergebilden eignen sich die gebrannten Formkörper z.B. als Filterkörper oder als wärmedämmende Körper, während bei einem niedrigeren Anteil an Fasergebilden dichtere Körper entstehen, die z.B. als Isolatoren in der Elektrotechnik verwendet werden können.

Die keramische Komponente der erfindungsgemäßen Zusammensetzung stellt entweder einen tonkeramischen oder einen sonderkeramischen Rohstoff oder Werkstoff dar.

Nach Ullmanns Enzyklopädie der Technischen Chemie, 4. Aufl. (1977), S. 712ff, können keramische Werkstoffe grob in tonkeramische Werkstoffe und sonderkeramische Werkstoffe eingeteilt werden. Der Hauptbestandteil der tonkeramischen Werkstoffe ist Ton, dessen besondere Eigenschaften für die Formgebung und den Brand ausschlaggebend sind. Die bekanntesten Tonminerale sind Kaolinit, Illit, Hallovsit und Montmorillonit, wobei letzterer für die Keramik nur eine beschränkte Bedeutung hat. Montmorillonit wird jedoch als Bindemittel für andere keramischen Komponenten verwendet.

Aus den tonkeramischen Werkstoffen können entweder feinkeramische oder grobkeramische Erzeugnisse hergestellt werden, wobei zu den grobkeramischen Erzeugnissen z.B. Ziegel, Tonrohre, Terrakotten, Schamottesteine, Tonsteine und Feuertonwaren als poröse Erzeugnisse und Klinker, Spaltplatten, säurefeste Steine und Baukeramik als dichte Erzeugnisse gehören. Aus den feinkeramischen Werkstoffen können ebenfalls poröse und dichte Erzeugnisse erhalten werden. Zu den porösen Erzeugnissen zählt das Tongut, das wiederum in farbiges Irdengut (z.B. Töpferwaren, Schmelzwaren) und in helles bis weißes Steingut (z.B. Geschirr, Sanitärwaren) unterteilt wird. Das dichte Tonzeug wird wiederum in das farbig bis helle Steinzeug (z.B. Sanitärwaren, Isolatoren, Fliesen, Spaltplatten) und das weiße Porzellan (z.B. Geschirr) unterteilt.

Aus den sonderkeramischen Werkstoffen können ebenfalls grobkeramische und feinkeramische Erzeugnisse erhalten werden. Bei den grobkeramischen Erzeugnissen unterscheidet man wieder zwischen porösen (z.B. Silicasteine, Forsteritsteine, Korundsteine, SiC-Steine, Schleifscheiben) und dichten (z.B. schmelzflüssig gegossene Steine, Schlackensteine) Erzeugnissen. Bei den feinkeramischen Erzeugnissen wird ebenfalls eine Unterscheidung in poröse (z.B. Schleifscheiben, Filter, oxidkeramische Isolierstücke) und dichte (Oxid-, Elektro-, Magnet-, Dental-, Glas-, Steatit- und Graphitkeramik) Erzeugnisse getroffen.

Die sonderkeramischen Werkstoffe werden im allgemeinen aus synthetischen Rohstoffen hergestellt und haben im allgemeinen eine geringe Bindigkeit und Plastizität. Sie konnten daher bisher noch nicht oder nur unter Zusatz von tonhaltigen Bindemitteln bzw. durch Preßverformung verformt werden. Mit Hilfe der erfindungsgemäß verwendeten Fasergebilde ist nun auch eine leichte Verformung dieser Werkstoffe möglich.

Besonders günstig läßt sich die vorliegende Erfindung in der Oxidkeramik einsetzen. Dieser Begriff umfaßt nahezu oder ganz kieselsäurefreie Werkstoffe und Erzeugnisse, die aus Oxiden und Oxidverbindungen hergestellt sind. Das am meisten verwendete Oxid ist Aluminiumoxid (Sinterkorund) neben folgenden Oxiden: BeO, MgO, ZrO₂, TiO₂ und MgAl₂O₄ (Spinell). Bewährt haben sich auch oxidkeramische Werkstoffe aus Ferriten, Titanaten, Yttrium, Thorium- und Uranoxid. Durch die Verarbeitung von Oxiden mit Metallen oder nichtoxidischen Verbindungen (Beispiel ZrO₂ + Ti, Al₂O₃ + W-Carbid) lassen sich besondere Eigenschaften erzielen (Metallkeramik).

Besonders bevorzugt werden für die keramische Komponente Lehm, Ton, Kaolinit, Illit, Halloysit, Montmorillonit, Schamotte, Silimanit, Mullit, Silica, Graphit, Oxidkeramik, Siliciumcarbid, Metallkeramik oder deren Gemische, gegebenenfalls mit den üblichen Zusätzen und Bindemitteln, verwendet.

Für gewisse Anwendungen, insbesondere auf dem Bausektor, ist es erwünscht, ungebrannte keramische Zusammensetzungen wasserdicht zu machen. Zu diesem Zweck fügt man den Zusammensetzungen Pech, insbesondere Brühpech, als wasserdichtmachenden Zusatz hinzu.

Die erfindungsgemäßen Zusammensetzungen können dadurch hergestellt werden, daß man die organischen Fasergebilde in eine Suspension der keramischen Komponente in einem flüssigen Medium, vorzugsweise Wasser, einarbeitet und das flüssige Medium, gegebenenfalls unter Formgebung mindestens teilweise entfernt.

Nach einer Variante des erfindungsgemäßen Verfahrens kann man die organischen Fasergebilde mit der trockenen, zerkleinerten keramischen Komponente vermischen und der trockenen Mischung ein flüssiges Medium, vorzugsweise Wasser, gegebenenfalls unter Formgebung, zusetzen.

Verwendet man bei dieser Variante als wasserdichtmachenden Zusatz Pech, insbesondere Brühpech, so setzt man dieses in gemahlener Form der trockenen Mischung zu und erwärmt die mit dem flüssigen Medium versetzte Zusammensetzung bis zum Schmelzen des Pechs.

Verwendet man als organische Fasergebilde die Flugschirmchen der Rohrkolbensahmen, so überführt man die an der Stammfaser befindlichen Samen vorzugsweise in einen keimunfähigen Zustand, um zu verhindern, daß die Samen auskeimen. Dies kann durch Dämpfen der Flugschirmchen oder der mit den Flugschirmchen vermischten Zusammensetzung geschehen.

Die erfindungsgemäße Zusammensetzung kann im ungebrannten Zustand als Modelliermasse, Verputzmasse, Baumaterial (z.B. für die Lehmbauweise und für Ausfachungen) und als Gießformmaterial verwendet werden. Ferner kann die erfindungsgemäße Zusammensetzung als Rohmaterial zur Herstellung von gebrannten keramischen Formkörpern verwendet werden, und zwar zur Herstellung von tonkeramischen und sonderkeramischen Erzeugnissen, wie sie vorstehend erwähnt sind.

Die Erfindung ist durch die nachstehenden Beispiele erläutert.

### Beispiel 1

Eine magere Schamottemasse aus 95 Gewichtsteilen gemahlener Schamotte und 5 Gewichtsteilen trockenem, pulverisiertem Steinzeugton wurde mit 1 Gewichtsteil gedämpften Flugschirmchen von Rohrkolbensamen vermischt. Die Mischung wurde mit Gewichtsteilen Wasser angemacht und gut verknetet (Masse A). In entsprechender Weise wurde eine Masse ohne Flugschirmchen hergestellt (Masse B). Mit beiden Massen wurden folgende Versuche durchgeführt:

### (a) Auswalzen

Die Massen wurden zwischen zwei Walzen mit einer Spaltbreite von 1 mm ausgewalzt. Die Masse A ergab einen zusammenhängenden Fladen, die Masse B zerbröselte beim Austritt aus dem Walzenspalt

### (b) Umformen

Eine Halbkugel aus Polystyrolschaum mit einem Durchmesser von 10 cm wurde mit den Massen A und B umformt, wobei die Wandstärke der Massen etwa 3 mm betrug. Die Masse A ergab eine zusammenhängende Schale, die sich leicht von der Polystyrolkugel lösen ließ. Die Masse B ließ sich nur schwer umformen und zerbrach beim Abnehmen in mehrere Stücke.

### (c) Trocknen

Aus den Massen A und B wurden Prüfkörper mit den Abmessungen 100 x 30 x 30 mm hergestellt. Die Masse B war nicht mehr frei formbar, sondern nur noch preßbar. Die beiden Formkörper wurden mit Hilfe eines Warmluftgebläses von 400°C etwa 2 Min. getrocknet, wobei der Prüfkörper aus der Masse A rissefrei trocknete. Dann wurde er auf zwei Auflager im Abstand von 90 mm gelegt und belastet. Der Bruch erfolgte bei einer mittigen Belastung von 8,5 kg.

Der Prüfkörper aus der Masse B zerbrach bereits beim Trocknen.

Auch der Fladen von (a) und die Schale von (b) aus der Masse A konnten bei 400°C 2 Minuten getrocknet werden, ohne daß sich Risse bildeten. Beide Prüfkörper zeigten nach dem Trocknen eine gewisse Elastizität.

### (d) Anformen

Die getrocknete Schale (b) aus der Masse A wurde an zwei Stellen angefeuchtet, worauf an den angefeuchteten Stellen ein Henkel aus der Masse A angeformt wurde. Der Henkel sprang beim Trocknen dem Warmluftgebläse von 400°C nicht ab. Ein getrocknetes Bruchstück der Schale (b) aus der Masse B wurde an zwei Stellen befeuchtet, wobei Risse auftraten, so daß die Anformung eines Henkels nicht mehr möglich war.

### (e) Brennen

Die mit dem Henkel versehene, getrocknete Schale (b) wurde bei 1100°C 20 Minuten gebrannt, wobei der Henkel fest mit der Schale verbunden blieb.

### Beispiel 2

Eine magere Schamottemasse aus 95 Gewichtsteilen gepulvertem Steinzeugton wurde mit 10 Gewichtsteilen gedämpften Flugschirmchen vermischt. Die Mischung wurde mit 20 Gewichtsteilen Wasser angemacht und gut verknetet. Die Masse wurde zwischen zwei Walzen mit einer Spaltbreite von 3 mm ausgewalzt und ergab wiederum einen zusammenhängenden Fladen, der mit einem Warmluftgebläse von 400°C 2 Minuten getrocknet wurde. Nach dem Brennen bei 1100°C über einen Zeitraum von 20 Minuten erhielt man einen porösen Fladen, der als Filterscheibe geeignet war.

### Beispiel 3

100 Gewichtsteile fetter Lehm mit einem Wassergehalt von 25 Gew.-% wurden mit 1,5 Gewichtsteilen Flugschirmchen von Rohrkolbensamen verknetet. Die erhaltene Masse wurde in einer Stärke von 20 mm als Lehmverputz auf eine Rabitz-Wand aufgetragen. Der Verputz trocknete an der Luft rissefrei. Die Masse kann auch für Ausfachungen und Lehmziegel verwendet werden, ohne daß beim Trocknen Risse auftreten.

### Beispiel 4

Eine magere Schamottemasse aus 95 Gewichtsteilen gepulverter Schamotte und 5 Gewichtsteilen trockenem, gepulvertem Steinzeugton wurde mit 1,5 Gewichtsteilen Flugschirmchen von Rohrkolbensamen und 3 Gewichtsteilen gepulvertem Brühpech trocken vermischt. Die trockene Mischung wurde mit 25 Gewichtsteilen Wasser vermischt und gründlich geknetet. Mit der plastischen Masse wurde eine Halbkugel aus Polystyrolschaum mit einem Durchmesser von 30 cm umformt, wobei eine zusammenhängende Schale mit einer Wandstärke von etwa 3 mm erhalten wurde. Die Schale ließ sich leicht von der Polystyrol-Halbkugel lösen und wurde 15 Minuten bei 130°C getrocknet, wobei auch das Brühpech schmolz. Die getrocknete Schale wurde gewogen und 2 Stunden mit einem Wasser-Sprühstrahl beregnet. Die Wasseraufnahme betrug etwa 0,2 %. Die Schale wurde noch mehrmals getrocknet und beregnet, wobei die Form erhalten blieb und auch keine Risse auftraten.

### Beispiel 5

Ein Schlicker aus 50 Gewichtsteilen pulverisierter Schamotte, 3 Gewichtsteilen fettem Steinzeugton, 1 Gewichtsteil Flugschirmchen aus Rohrkolbensamen und 70 Gewichtsteilen Wasser wurde in einer porösen Gipsform zu einem Hohlzylinder mit einer Länge von 800 mm, einem Innendurchmesser von 72 mm und einem Außendurchmesser von 80 mm gegossen. Der Hohlzylinder wurde nach dem Antrocknen der Gipsform entnommen und 15 Minuten bei 250°C getrocknet. Es traten weder nach dem Trocknen, noch nach dem Brennen Risse auf.
In entsprechender Weise wurde ein Schlicker ohne Flugschirmchen hergestellt und in der gleichen porösen Gipsform gegossen. Der erhaltene Hohlzylinder zeigte beim Trocknen Risse.

### Beispiel 6

Als keramische Zusammensetzungen im weiteren Sinne wurde eine Lehmputzmasse mit folgender Zusammensetzung hergestellt :
80 Gewichtsteile Brechsand bis 2 mm, 12 Gewichtsteile Tonmehl, von fettem, illitischem Steinzeugton, 6,5 Gewichtsteile Gerstengrannen, gereinigt, 1,5 Gewichtsteile Flugschirmchen von Rohrkolbensamen.

Die Komponenten wurden trocken vorgemischt und nach Zugabe von Wasser in einem Mörtelmischer fertig gemischt. Die Verputzmasse zeigte nach dem Aufbringen und Trocknen keine Risse.

### Beispiel 7

100 Gewichtsteile handelsübliches gemahlenes Aluminiumoxid wurde mit 25 Gewichtsteilen Wasser und 4 Gewichtsteilen Flugschirmchen von Rohrkolbensamen vermischt und in einer Strangpresse mit rundem Preßmaul von 3 cm Durchmesser zu einem Strang verpreßt, der mit einem Radius von 0,5 m aufgerollt werden konnte.

Die gleiche Masse ohne Flugschirmchen zerfiel beim Auspressen in kurze Stücke.

### Beispiel 8

85 Gewichtsteile Siliciumcarbid mit folgender Kornverteilung nach der Fullerkurve :
0,0 bis 0,1 mm : 35 %
0,1 bis 0,5 mm : 25 %
0,5 bis 1,0 mm : 35 %
1,0 bis 2,0 mm : 5 %
wurden mit 25 Gewichtsteilen Wasser, 3 Gewichtsteilen Flugschirmchen von Rohrkolbensamen, 3 Gewichtsteilen fettem Steinzeugton und 6 Gewichtsteilen feingemahlener Schamotte vermischt, durchgeknetet, in der Strangpresse zu einem Rohr mit einem Außendurchmesser von 30 mm, einer Wandstärke von 3 mm und einer Länge von 5 m verpreßt und ohne nennenswerte Verformung des Rohrs in einem Radius von 1 m aufgerollt. Abschnitte davon wurden bis zur Sinterung des Schamotte-Klebers gebrannt und lieferten äußerst feste, leicht poröse Probekörper, die in veränderter Form auch als Filterkörper (z.B. zur Entrußung von Dieselabgasen) geeignet sind.

### Beispiel 9

In die Masse von Beispiel 8 wurden 20 Gewichtsteile feines Sägemehl eingeknetet, und die so erhaltene Masse wurde in eine Ziegelform eingeschlagen, ausgeformt, im Heißluftstrom etwa 15 Minuten getrocknet und bei etwa 2000°C gebrannt. Das so gewonnene Formstück erwies sich als Dämmstoff, der bessere Dämmwerte aufweist, als handelsüblicher Dämm-Schamottestein. Darüber hinaus zeigte er sich temperaturbeständig bis über 2300°C.

### Beispiel 10

85 Gewichtsteile Graphit (Plättchengraphit aus Kropfmühl bis 1 mm, 98 % Reinheit) wurden mit 20 Gewichtsteilen fettem Steinzeugton, 40 Gewichtsteilen Schamottemehl (Korngröße bis 1 mm), 35 Gewichtsteilen Wasser und 4 Gewichtsteilen Flugschirmchen von Rohrkolbensamen vermischt und gut geknetet. Die Masse wurde mit einer Wandstärke von 4 mm von Hand über eine Polystyrol-Schaumkugel von 50 cm ø geformt, 15 Minuten mit Heißluft getrocknet und im Reduktionsbrand 1 Stunde bei 900°C gebrannt. Der Probekörper zeigte nach dem Abkühlen maximale Abweichungen von der Kugelform von etwa 1,5 % und war rissefrei.

## Patentansprüche

1. Keramische Zusammensetzung in Form von ungebrannten Massen oder Formkörpern, enthaltend eine keramische Komponente und faserförmige organische Verstärkungen, dadurch **gekennzeichnet**, daß sie als faserförmige organische Verstärkungen Fasergebilde aus cellulosehaltigem Material mit einer etwa 3 - 15 mm langen und etwa 30 - 40 µm starken Stammfaserbündel, von der mehrere, etwa gleich lange und etwa 10 - 30 µm starke radiale Seitenfasern ausgehen, enthält.

2. Zusammensetzung nach Anspruch 1, dadurch gekennzeichnet, daß die radialen Seitenfasern der Fasergebilde von einer oder von mehreren Stellen des Stammfaserbündels ausgehen.

3. Zusammensetzung nach Anspruch 1 oder 2, dadurch gekennzeichnet, daß die Fasergebilde die Flugschirmchen von Rohrkolbensamen (Typhaceen) darstellen.

4. Zusammensetzung nach Anspruch 1 bis 3, dadurch gekennzeichnet, daß sie etwa 0,05 - 20 Gew.-%, vorzugsweise etwa 0,5 - 5 Gew.-%, insbesondere 1 - 2 Gew.-%, Fasergebilde, bezogen auf das Trockengewicht, enthält.

5. Zusammensetzung nach Anspruch 1 bis 4, dadurch gekennzeichnet, daß die keramische Komponente einen tonkeramischen oder sonderkeramischen Rohstoff oder Werkstoff darstellt.

6. Zusammensetzung nach Anspruch 1 bis 5, dadurch gekennzeichnet, daß die keramische Komponente Lehm, Ton, Kaolinit, Illit, Halloysit, Montmorillonit, Schamotte, Silimanit, Mullit, Silica, Graphit, Oxidkeramik, Siliciumcarbid, Metallkeramik oder deren Gemische, gegebenenfalls mit den üblichen Zusätzen und Bindemitteln, darstellt.

7. Zusammensetzung nach einem der Ansprüche 1 bis 6, dadurch gekennzeichnet, daß sie Pech, insbesondere Brühpech, als wasserdichtmachenden Zusatz enthält.

8. Verfahren zur Herstellung einer keramischen Zusammensetzung nach einem der Ansprüche 1 bis 7, dadurch gekennzeichnet, daß man die organischen Fasergebilde in eine Suspension der keramischen Komponente in einem flüssigen Medium einarbeitet und das flüssige Medium gegebenenfalls unter Formgebung mindestens teilweise entfernt.

9. Verfahren zur Herstellung einer keramischen Zusammensetzung nach einem der Ansprüche 1 bis 7, dadurch gekennzeichnet, daß man die organischen Fasergebilde mit der trockenen, zerkleinerten keramischen Komponente vermischt und der trockenen Mischung ein flüssiges Medium, gegebenenfalls unter Formgebung, zusetzt.

10. Verfahren nach Anspruch 9, dadurch gekennzeichnet, daß man der trockenen Mischung gemahlenes Pech, insbesondere Brühpech, zusetzt und die mit dem flüssigen Medium versetzte Zusammensetzung bis zum Schmelzen des Pechs erwärmt.

11. Verfahren nach einem der Ansprüche 8 bis 10, dadurch gekennzeichnet, daß man bei Verwendung von Flugschirmchen der Rohrkolbensamen die an dem Stammfaserbündel befindlichen Samen in einen keimunfähigen Zustand überführt.

12. Verwendung der Zusammensetzung nach einem der Ansprüche 1 bis 8 bzw. nach einem der Ansprüche 9 bis 11 hergestellten Zusammensetzung als Modelliermasse, Verputzmasse, Baumaterial und Gießformmaterial.

13. Gebrannte keramische Formkörper, erhältlich aus der Zusammensetzung nach einem der Ansprüche 1 bis 7 bzw. aus der nach den Ansprüchen 8 bis 11 hergestellten Zusammensetzung.

## Claims

1. Ceramic composition in the form of uncalcined masses or shaped bodies, comprising a ceramic component and fibrous organic reinforcements, characterized in that the fibrous organic reinforcements are fibre structures of cellulose-containing material having a stem fiber bundle with a length of about 3 - 15 mm and a thickness of about 30 - 40 µm, from which radial side fibres extend which have about the same length and a thickness of about 10 - 30 µm.

2. Composition according to claim 1, characterized in that the radial side fibres of the fibre structures extend from one or several places of the stem fibre bundle.

3. Composition according to claims 1 or 2, characterized in that the fibre structure is represented by the flying umbrellas of typhacea seeds.

4. Composition according to claims 1 to 3, characterized in that it contains about 0.05 - 20% by weight, preferably about 0.5 - 5% by weight, in particular 1 - 2% by weight, fibre structures, based on the dry weight.

5. Composition according to claims 1 to 4, characterized in that the ceramic component represents a clay - ceramic or special ceramic raw material or working material.

6. Composition according to claims 1 to 5, characterized in that the ceramic component represents loam, clay, kaolinite, illite, halloyisite, montmorillonite, fire brick, silimanite, mullite, silica, graphite, oxide ceramics, silicon carbide, metal ceramics or mixtures thereof, optionally with the usual additives and binders.

7. Composition according to any one of claims 1 to 6, characterized in that it contains pitch, in particular boiled pitch, as waterproofing agent.

8. Method of producing a ceramic composition according to any one of claims 1 to 4, characterized in that the organic fibre structures are worked into a suspension of the ceramic component in a liquid medium, and the liquid medium, optionally with shaping, is at least partially removed.

9. Method of producing a ceramic composition according to any one of claims 1 to 7, characterized in that the organic fibre structures are mixed with the dry, comminuted ceramic component, and a liquid medium is added to the dry mixture, optionally with shaping.

10. Method according to claim 9, characterized in that ground pitch, in particular boiled pitch, is added to the dry mixture, and the composition to which the liquid medium has been added is heated until the pitch is molten.

11. Method according to any one of claims 8 to 10, characterized in that, when the flying umbrellas of the typhacea seeds are used, the seeds being located at the stem fibre bundle are converted into a non-germinating state.

12. The use of the composition according to any one of claims 1 to 8 or produced according to any one of claims 9 to 11, as a modelling composition, plaster composition, building material and mould material.

13. Calcined ceramic shaped body, obtainable from a composition according to any one of claims 1 to 7 or from the composition produced according to any one of claims 8 to 11.

## Revendications

1. Composition céramique sous forme de brai non cuit ou forme moulée comprenant un composant céramique et des renforcements fibreux organiques, caractérisée par le fait qu'elle contient un produit fibreux sous forme de renforcements fibreux organique, se composant d'un matériau contenant du cellulose avec un faisceau de fibres centrales d'environ 3 - 15 mm de long et d'environ 30 - 40 µm d'épaisseur dont partent plusieurs fibres radiales de longueur environ similaire et d'environ 10 - 30 µm d'épaisseur.

2. Composition d'après la revendication 1, caractérisée par le fait que les fibres radiales du produit fibreux partent d'un ou de plusieurs endroits du faisceau de fibres centrales.

3. Composition d'après les revendications 1 ou 2, caractérisée par le fait que le produit fibreux est constitué par les aigrettes des graines du panicule du roseau (typhacées).

4. Composition d'après les revendications 1 à 3, caractérisée par le fait qu'elle comprend 0,05 - 20 % en poids de produit fibreux, de préférence 0,5 - 5 % en poids et en particulier 1 - 2 % en poids, par rapport au poids à l'état sec.

5. Composition d'après une des revendications 1 à 4, caractérisée par le fait que le composant céramique présente un matériau brute ou fini en céramique à base d'argile ou un céramique spéciale.

6. Composition d'après les revendications 1 à ,5 caractérisée par le fait que la composante céramique est constituée par de la glaise, de l'argile, de la kaolinite, de l'illite, de l'halloysite, de la montmorillonite, de la chamotte, de la silimanite, de la mullite, de la silice, du graphite, de la céramique oxydée, du carbure de silicium, du cermet ou leurs combinaisons, le cas échéant avec les additifs et liants habituels.

7. Composition d'après une des revendications 1 à 6, caractérisée par le fait qu'elle contient de la poix, au particulier de la poix cuite.

8. Procédé pour la fabrication d'une composition céramique d'après l'une des revendications 1 à 7, caractérisé par le fait que le produit fibreux organique est ingéré dans une suspension de la composante céramique dans un milieu liquide et que le milieu liquide est éliminé, au moins partiellement, le cas échéant par modelage.

9. Procédé pour la fabrication d'une composition céramique d'après l'une des revendications 1 à 7, caractérisé par le fait que le produit fibreux organique est mélangé à la composante céramique, sèche et broyée , et qu'un milieu liquide est joint au mélange sec, le cas échéant par modelage.

10. Procédé suivant la revendication 9, caractérisé par le fait que de la poix, en particulier de la poix broyée, est ajoutée au mélange sec et que la composition, mélangée au milieu liquide, est échauffée jusqu'à liquéfaction de la poix.

11. Procédé d'après l'une des revendications 8 à 10, caractérisé par le fait que, lors de l'utilisation d'aillettes des graines du panicule du roseau, les graines se trouvant dans le faisceau de fibres centrales sont réduites à un état ne permettant plus la germination.

12. Application de la composition d'après l'une des revendications 1 à 8 et/ou à partir de la composition obtenue d'après l'une des revendications 9 à 11 en tant que pâte à modelage, enduit ou crépi, matériau de construction et matériau pour moules.

13. Forme moulée céramique cuite que l'on peut obtenir à partir de la composition d'après l'une des revendications 1 à 7, et/ou à partir de la composition obtenue d'après les revendications 8 à 11.
